Europäisches Patentamt

European Patent Office

Office européen des brevets

(11) Veröffentlichungsnummer: **0 092 728**

A1

(12) **EUROPÄISCHE PATENTANMELDUNG**

(21) Anmeldenummer: 83103490.5

(51) Int. Cl.³: **C 08 G 81/02**

(22) Anmeldetag: 11.04.83

(30) Priorität: 22.04.82 DE 3214982

(43) Veröffentlichungstag der Anmeldung:
02.11.83 Patentblatt 83/44

(84) Benannte Vertragsstaaten:
AT BE DE FR GB NL

(71) Anmelder: BASF Aktiengesellschaft
Carl-Bosch-Strasse 38
D-6700 Ludwigshafen(DE)

(72) Erfinder: Brandstetter, Franz, Dr.
Ritterbueschel 45
D-6730 Neustadt(DE)

(72) Erfinder: Simak, Petr, Dr.
Philipp-Scheidemann-Strasse 17
D-6700 Ludwigshafen(DE)

(72) Erfinder: Sadlowski, Juergen, Dr.
Edenkobener Strasse 3
D-6700 Ludwigshafen(DE)

(72) Erfinder: Walter, Manfred, Dr.
Hans-Purrmann-Allee 18
D-6720 Speyer(DE)

(72) Erfinder: Ziegler, Walter, Dr.
Starenweg 15
D-6803 Edingen-Neckarhausen(DE)

(54) Verfahren zur Herstellung von Blockcopolymeren auf der Basis von Ethylenpolymerisaten und anderen Polymeren.

(57) Die Erfindung betrifft ein Verfahren zur Herstellung von Blockcopolymeren auf der Basis von Ethylencopolymerisaten, die mindestens eine funktionelle Gruppe aus der Reihe der Epoxide einpolymerisiert enthalten und anderen Polymeren, wobei die Ethylencopolymerisate mit Polymeren umgesetzt werden, die mindestens eine funktionelle Gruppe aus der Reihe der Alkohole, Phenole, Amine, Säuren und/oder Thiole aufweisen. Das Ethylencopolymerisat ist insbesondere ein Glycidylmethacrylat enthaltendes Copolymerisat des Ethylens, die Polymeren haben insbesondere eine funktionelle Gruppe aus der Reihe der Alkohole, Phenole, Amine, Säuren und/oder Thiole. Das Polymere kann auch nur eine funktionelle Endgruppe aus der Reihe der Alkohole und Phenole aufweisen und ein Poly(carbonat), Poly(phenylenoxid), Poly(ester), Poly(ethylenglykolmonoester), Poly(propylenglykolmonoether) oder ein Poly(propylenglykolmonoester), insbesondere Poly(2,6-dimethylphenylenoxid), sein.

BASF Aktiengesellschaft

Verfahren zur Herstellung von Blockcopolymeren auf der
Basis von Ethylenpolymerisaten und anderen Polymeren

Die Erfindung betrifft ein Verfahren zur Herstellung von
Blockcopolymeren auf der Basis von Ethylencopolymerisaten,
die mindestens eine funktionelle Gruppe aus der Reihe
der Epoxide einpolymerisiert enthalten und anderen Polymeren.

Bei derartigen Blockcopolymeren handelt es sich um Polymere, in denen neben normalen Copolymeren, die aus Ethylen
und einem mit Ethylen copolymerisierbaren Monomer aufgebaut sind, homo- oder copolymere Kettenabschnitte oder
Blöcke anderer Monomerer enthalten sind.

Blockcopolymerisate auf der Basis von Ethylen sind aus
der Literatur bekannt. Sie werden u.a. durch die radikalische Polymerisation verschiedener Monomerer in Gegenwart von Polyethylen hergestellt, wie es beispielsweise
von Renfrew und Morgan in "Polythene" (1960), Seiten 373
bis 376, Verlag Iliffe & Sons Ltd, London, beschrieben
ist.

Des weiteren kennt man Blockcopolymere auf der Basis von
Ethylen mit Polyamiden, die durch die Umsetzung von nitrosierten Carbonamidgruppen enthaltenden Polyamiden erhalten
werden (vgl. DE-PS 11 22 696).

Im Falle der Polyamide ist ein zusätzlicher Reaktionsschritt nötig. Bei der Herstellung der mit radikalisch
polymerisierbaren Monomeren produzierbaren Blockpfropfcopolymeren werden recht heterogene Produkte erhalten.
Des weiteren ist dieses Verfahren nur bei radikalisch
polymerisierbaren Monomeren möglich.

Fre/P

Es ist auch schon vorgeschlagen worden, zur Herstellung von Blockcopolymeren auf der Basis von Ethylencopolymerisaten die Ethylencopolymerisate mit lebenden polymeren Anionen, erhalten aus ethylenisch ungesättigten, anionisch polymerisierbaren Monomeren umzusetzen (vgl. DE-Patentanm. P 31 50 171). Dieses Verfahren ist nur bei anionisch polymerisierbaren Monomeren anwendbar.

Der Erfindung lag die Aufgabe zugrunde, ein einfaches Verfahren zur Herstellung von Blockcopolymeren auf der Basis von Ethylencopolymerisaten aufzufinden.

Diese Aufgabe wurde durch ein Verfahren gelöst, bei dem Ethylencopolymerisate mit Polymeren umgesetzt werden, die mindestens eine funktionelle Gruppe aus der Reihe der Alkohole, Phenole, Amine, Säuren und/oder Thiole aufweisen.

Nach bevorzugter Verfahrensweise ist das Ethylencopolymerisat ein Glycidylmethacrylat enthaltendes Copolymerisat des Ethylens.

Bevorzugt ist auch ein Verfahren, bei dem die Polymeren nur eine funktionelle Gruppe aus der Reihe der Alkohole, Phenole, Amine, Säuren und/oder Thiole aufweisen.

Besonders bevorzugt ist ein Verfahren, bei dem die Polymeren je eine funktionelle Endgruppe aus der Reihe der Alkohole und Phenole aufweisen und ein Poly(carbonat), Poly(phenylenoxid), Poly(ester), Poly(amid), Poly(oximethylen), Poly(ethylenglykolmonoether), Poly(ethylenglykolmonoester), Poly(propylenglykolmonoether) oder ein Poly(propylenglykolmonoester), insbesondere aber Poly(2,6-dimethylphenylenoxid) sind.

Durch das Verfahren werden Blockcopolymere der allgemeinen Formel erhalten:

$[(A_n)_i (B_1)_k (C_m)_j]$, wobei A gleich Ethylen und ein mit Ethylen copolymerisierbares Monomeres aus der Reihe der (Meth)-Acrylate, der Vinylester, Vinylether, der ungesättigten Nitrile, Amide, Halogene, Vinylsilane und Kohlenmonoxid, B ein mit Ethylen copolymerisierbares, eine Gruppe aus der Reihe der Epoxide tragendes Monomer, Cm ein Polymerrest eines Stammpolymeren, das mindestens eine funktionelle Gruppe aus der Reihe der Alkohole, Phenole, Amine und/oder Thiole trug, n und m eine ganze Zahl größer als 30, 1, i, k und j eine ganze Zahl gleich oder größer als 1 und k . 1 gleich oder größer j ist. Bei A sind mindestens 30 Gew.%, vorzugsweise mindestens 50 Gew.% Ethylen. Ganz besonders ist Ethylen alleine bevorzugt. Bei den unter A verwendeten Comonomeren handelt es sich beispielsweise um Methylacrylat, Ethylacrylat, n-Butylacrylat, t-Butylacrylat, Ethylhexylacrylat, Laurylacrylat, Methylmethacrylat, Vinylacetat, Vinylpropionat, Vinylbutyrat, Methylvinylether, Acrylnitril, Acrylsäuredimethylamid, Vinylchlorid oder Kohlenmonoxid.

Bei B wird bevorzugterweise Glycidylmethacrylat verwendet. Bei $C_m$ handelt es sich um Polymerreste, die beispielsweise aus folgenden Stammpolymeren herrühren können: Polycarbonate, Polysulfone, Polyethersulfone, Polyether, Polyoximethylene, voll oder partiell verseifte Polyvinylacetate, um partiell oder nicht veretherte und/oder veresterte Cellulose, um Polymere mit Hydroxylgruppen aus der Reihe der Polybutadiene, Polyisoprene, Polystyrole, Polystyrolacrylnitrile, Poly(meth)acrylate, um Polyester, Polyurethane, Phenoplaste, Poly(esteramide), Poly(amide) und Poly(ethylenimine), Poly(tetrahydrofuran). Als besonders geeignet werden Poly(carbonate), Poly(phenylenoxide), Monoether bzw. Monester von Poly(ethylenglykol) und Poly(propylenglykol), Poly(ester) und Poly(amide) angesehen. Ganz besonders bevorzugt ist Poly(2,6-dimethylphenylenoxid).

Derartige Polymere sind beispielsweise beschrieben in dem Handbuch "Ullmanns Encyclopädie der Technischen Chemie", Band 19 (1980), Seiten 31 bis 38, 39 bis 88, 227 bis 264 und 297 bis 342 oder in "Journal Polymer Science" 40 (1959), Seite 399, in "Industrial Engineering Chemistry" 51 (1959), Seite 147, in den US-Patentschriften 33 06 879, 39 14 266, 39 46 091, 40 28 341, 39 56 442 und 39 65 069; in den Deutschen Offenlegungsschriften 29 40 190, 29 36 977 und 30 16 386; in "Polymer Bulletin" 4 (1981), Seiten 343 bis 350 in der Broschüre "Neue polymere Werkstoffe" 1969-1974, von H.G. Elias, Carl Hanser Verlag, München-Wien, (1975); im Lehrbuch "Polymer Chemistry" von B. Vollmert, Springer Verlag, Berlin - Heidelberg - New York (1973); im "Polymer Handbook", von I. Brandrup und E.H. Immergut (1975), Verlag John Wiley a. Sons, New York; und in Houben-Weyl, "Methoden der organischen Chemie", Band 14/2 (1963) Seiten 1 bis 636, Verlag Georg Thieme, Stuttgart.

Die erfindungsgemäß zu verwendenden Ethylenpolymerisate, die mindestens eine funktionelle Gruppe aus der Reihe der Epoxide enthalten, sind an sich bekannt (vgl. Renfrew u. Morgan, "Polythene", [1960], Seiten 345 bis 369, Verlag Iliffe & Sons Ltd. London oder Yocum u. Nyquist "Funktional Monomers" 2 [1974], 424 - 425, Verlag Marcel Dekker, New York sowie US-PS 3 532 590 und GB-PS 1 146 579). Die Herstellung der Ethylenpolymerisate kann nach herkömmlichen Verfahren im Autoklaven und/oder rohrförmigen Polymerisationssystem bei Drücken von 150 bis 5000 bar und Temperaturen von 40 bis 450°C in Gegenwart radikalisch zerfallen-

**0092728**

der Polymerisationsinitiatoren erfolgen (vgl. Ullmanns Encyclopädie der Technischen Chemie, Band 19, (1980), Seiten 167 bis 226).

Die Ethylencopolymerisate haben eine Dichte im Bereich von 0,910 bis 0,965, insbesondere 0,915 bis 0,960 g/cm$^3$. Die Schmelzindices der Ethylencopolymerisate, gemessen bei 190°C und einem Auflagegewicht von 2,16 kg, liegen oberhalb von 0,01 g/10 min. Die Ethylencopolymerisate weisen die allgemeine Formel: $[(A_n)_i (B_1)_k]$ auf, wobei A gleich Ethylen und ggf. ein mit Ethylen copolymerisierbares Monomeres aus der Reihe der (Meth)-Acrylate, der Vinylester, Vinylether, der ungesättigten Nitrile, Amide, Halogene, Vinylsilane und Kohlenmonoxid, B ein mit Ethylen copolymerisierbares, eine Gruppe aus der Reihe der Epoxide tragendes Monomer, n eine ganze Zahl größer als 30, 1, i und k eine ganze Zahl gleich oder größer als 1 ist. Die Zahlen für n und 1 entsprechen dem Polymerisationsgrad, die Zahlen für i und k der Blockanzahl im Copolymerisat.

Für das erfindungsgemäße Verfahren besonders geeignet sind Copolymerisate des Ethylens mit Glycidylmethacrylat.

Nach dem erfindungsgemäßen Verfahren werden die oben beschriebenen Ethylencopolymerisate in Lösung oder in Schmelze, bevorzugt unter Sauerstoffausschluß mit den Polymeren, die eine funktionelle Gruppe aus der Reihe der Alkohole, Phenole, Amine, Säuren und/oder Thiole enthalten, umgesetzt. Die Umsetzung erfolgt dabei unter den üblichen Bedingungen, wie sie beispielsweise für die Herstellung von Estern, Amiden, Urethanen, Ethern und Thioethern in dem Lehrbuch "Organikum", VEB Deutscher Verlag der Wissenschaften, 1968, S. 250, zitiert sind. Die Reaktion erfolgt dabei in Gegenwart von sauren oder basischen Katalysatoren, wie $SnCl_4$, Bortrifluorid, Natrium-

alkoholate, NaOH, KOH, wie es beispielsweise in Houben-Weyl, "Methoden der organischen Chemie", Band VI/3 (1966), S. 456-468 und Band XIV/2 (1963), S. 756-758 und S. 787-789, beschrieben ist. Die Umsetzung der Ethylencopolymerisate mit den funktionellen Gruppen enthaltenden Polymeren kann aber auch in der Schmelze erfolgen; die Mischung der Schmelzen wird dabei bevorzugt auf stark homogenisierenden Mischaggregaten, wie Extrudern oder Walzen vorgenommen.

Die erfindungsgemäß erhaltenen Blockcopolymerisate sind Polymerisate mit einer Vielfalt von Eigenschaften und zeigen eine Reihe von Vorteilen gegenüber bisher bekannten Blockcopolymerisaten. Sie können auf herkömmlichen Maschinen durch Formblasen, Extrusion oder Spritzguß verarbeitet werden. Sie können alleine, insbesondere als Schmelzhaftkleber, als Mineralöladditive oder in Kombination mit anderen Thermoplasten zur Verbesserung der Zähigkeit, Fließeigenschaften und des Oberflächenbildes verwendet werden.

Die Erfindung wird anhand von Beispielen erläutert.

Beispiele

Als Ethylencopolymere fanden Produkte Verwendung, die nach dem Hochdruckprozeß in Autoklaven oder rohrförmigen Polymerisationssystemen erhalten wurden. Der Comonomeranteil, Dichte und Schmelzindex sind in der Tabelle aufgeführt.

Als Polymere, die mindestens eine funktionelle Gruppe aus der Reihe der Alkohole, Phenole, Amine, Säuren, Thiole enthalten, wurden verwendet:

1. Poly(2,6-dimethylphenylenoxid) mit einer Grenz-viskosität von 0,48 $\frac{dl}{g}$ gemessen in Chloroform bei 30°C.

2. Monooctylphenylether von Dihydroxipolyethylenglycol mit ca. 40 Ethylenoxideinheiten.

3. Monononylphenylether eines Copolymerisates aus Propylen- und Ethylenoxid mit ca. 50 Propylenoxid und ca. 50 Ethylenoxideinheiten.

4. Polycarbonat auf der Basis von 2,2-Bis-(4-hydroxi-phenyl)propan mit einer relativen Viskosität von 1,32 (gemessen an einer 0,5%igen Lösung in Methylenchlorid).

5. Polybutadien mit einer Hydroxylendgruppe mit einem, mittleren Molekulargewicht von 10 000.

6. Polybutadien mit einer Thiolendgruppe mit einem mittleren Molekulargewicht von 5 000.

7. Blockcopolymerisat aus Styrol/Butadien (70 Gewichtsteile Styrol/30 Gewichtsteile Butadien) mit einer Hydroxylendgruppe mit einem mittleren Molekulargewicht von 12 000.

8. Polystyrol mit einer Hydroxylendgruppe mit einem mittleren Molekulargewicht von 16 000.

Herstellung der Blockcopolymerisate

Das Ethylencopolymerisat, das 8 Stunden bei 60°C im Vakuum bei 1 Torr getrocknet wurde, wurde in trockenem Ethylbenzol bei 80 bis 110°C unter Stickstoff gelöst.

Beispiele 1-9

Zu der in der Tabelle angegebenen Menge an Ethylencopolymerisat (ca. 10%ig in Ethylbenzol) wurden unter Luft- und
Feuchtigkeitsausschluß die in der Tabelle angegebene Menge
an Poly(2,6-dimethylphenylenoxid) (ca. 10%ig in Ethylbenzol) und an Katalysator unter Rühren gegeben. Man
rührte bei der in der Tabelle angegebenen Temperatur die
in der Tabelle angegebene Zeit. Nach dem Abkühlen wurde
das Reaktionsprodukt in Methanol ausgefällt, abgesaugt und
bei 60°C im Vakuum bei 1 Torr getrocknet.

Zur Bestimmung des Umsatzes wurden 5 g des Blockcopolymerisats 5 Stunden bei 23°C in 100 ml Tetrahydrofuran (THF) gerührt. Man dekantierte und wiederholte den Vorgang noch
zweimal. Dann wurde nach dem Abdampfen des Lösungsmittels
der unlösliche Anteil bestimmt. Hieraus wurde der Umsatz
folgendermaßen ermittelt:

$$\text{Umsatz} = \frac{100 \cdot A}{5}$$

Beispiele 10-13, 19-20

Zu der in der Tabelle angegebenen Menge an Ethylencopolymerisat (ca. 10%ig in Ethylbenzol) wurden unter Luft- und
Feuchtigkeitsausschluß die in der Tabelle angegebene Menge
an Monooctylphenylether von Dihydroxipolyethylenglycol
bzw. Monononylphenylether eines Copolymerisates aus
Propylen- und Ethylenoxid (ca. 20%ig in Ethylbenzol) und
an Katalysator unter Rühren gegeben.

Man rührte bei der in der Tabelle angegebenen Temperatur, die in der Tabelle angegebene Zeit. Nach dem Abkühlen wurde das Reaktionsprodukt in Ethanol ausgefällt, zweimal mit Ethanol und einmal mit Methanol gewaschen und bei 60°C im Vakuum bei 1 Torr getrocknet. Der Umsatz wurde folgendermaßen bestimmt:

$$Umsatz = \frac{A \cdot 100}{B}$$

B: Menge an Ethylencopolymerisat und an Ether von Dihydroxipolyethylenglycol bzw. von dem Copolymerisat des Propylen- und Ethylenoxid, die zur Reaktion gebracht werden [in g]

A: Menge an gefälltem Produkt [in g]

## Beispiel 14

Zu der in der Tabelle angegebenen Menge an Ethylencopolymerisat (ca. 10%ig in Ethylbenzol) wurden unter Stickstoff und unter Feuchtigkeitsausschluß die in der Tabelle angegebene Menge an Polycarbonat (ca. 10%ig in Chloroform) und an Katalysator unter Rühren gegeben. Man rührte bei der in der Tabelle angegebenen Temperatur die in der Tabelle angegebene Zeit. Nach dem Abkühlen wurde das Reaktionsprodukt mit Methanol ausgefällt, abgesaugt und im Vakuum bei 60°C und 1 Torr getrocknet. Die Bestimmung des Umsatzes erfolgte wie in den Beispielen 1 bis 9 beschrieben mit der Abänderung, daß als Extraktionsmittel Chloroform verwendet wurde.

## Beispiele 15 bis 18

Zu der in der Tabelle angegebenen Menge an Ethylencopolymerisat (ca. 10%ig in Ethylbenzl) wurden unter Stickstoff und Feuchtigkeitsausschluß die in der Tabelle angegebene Menge an OH- bzw. SH-Endgruppen enthaltenden Polymeren (ca. 15%ig in Ethylbenzol) und an Katalysator unter Rühren gegeben. Man rührte bei der in der Tabelle angegebenen Temperatur die in der Tabelle angegebene Zeit. Nach dem Abkühlen wurde das Reaktionsprodukt in Methanol ausgefällt, abgesaugt und bei 60°C im Vakuum bei 1 Torr getrocknet.

Die Bestimmung des Umsatzes erfolgte wie in den Beispielen 1 bis 9 beschrieben.

Die Ermittlung des Schmelzindex erfolgt bei 190°C und 2,16 kp nach DIN 53 735, die der Dichte nach DIN 53 479.

Tabelle

| Beisp. (erfindungsgemäß) | Ethylencopolymerisat | | | | | Polymer mit funktioneller Gruppe | |
| | Comonomeres | [Gew.%] | Dichte [g/cm³] | Schmelzindexs 190°C/2,16 kp [g/10 min] | Gew.Tle. | Art | [Gew.Tle.] |
|---|---|---|---|---|---|---|---|
| 1 | Glycidylmethacrylat | 2 | 0,923 | 0,7 | 100 | 1 | 20 |
| 2 | " | 2 | 0,923 | 0,7 | 100 | 1 | 80 |
| 3 | " | 2 | 0,923 | 0,7 | 100 | 1 | 100 |
| 4 | " | 5 | 0,926 | 0,7 | 100 | 1 | 100 |
| 5 | " | 5 | 0,926 | 0,7 | 100 | 1 | 210 |
| 6 | " | 5 | 0,926 | 0,7 | 100 | 1 | 300 |
| 7 | " | 9 | 0,926 | 3,5 | 100 | 1 | 200 |
| 8 | " | 9 | 0,926 | 3,5 | 150 | 1 | 400 |
| 9 | " | 9 | 0,926 | 3,5 | 150 | 1 | 600 |
| 10 | " | 2 | 0,918 | 0,3 | 200 | 2 | 5 |
| 11 | " | 2 | 0,918 | 0,3 | 200 | 2 | 10 |
| 12 | " | 2 | 0,918 | 0,3 | 200 | 3 | 50 |
| 13 | " | 2 | 0,923 | 0,7 | 100 | 3 | 75 |
| 14 | " | 2 | 0,923 | 0,7 | 100 | 4 | 140 |
| 15 | " | 2 | 0,923 | 0,7 | 100 | 5 | 10 |
| 16 | " | 2 | 0,923 | 0,7 | 100 | 6 | 50 |
| 17 | " | 2 | 0,923 | 0,7 | 100 | 7 | 75 |
| 18 | " | 2 | 0,923 | 0,7 | 100 | 8 | 75 |
| 19 | " | 2 | 0,925 | 40 | 100 | 2 | 50 |
| 20 | " | 11 | 0,927 | 0,3 | 100 | 3 | 20 |

Tabelle (Fortsetzung)

| Beisp.<br>(erfindungs-<br>gemäß) | Blockcopolymerisat | | Katalysator | [Gew.Tle.] | Umsatz<br>[%] |
|---|---|---|---|---|---|
| | Reaktions-<br>temp.<br>[°C] | Reaktions-<br>zeit<br>[Std.] | | | |
| 1 | 110 | 3 | Natriummethylat | 0,05 | 85 |
| 2 | 110 | 3 | " | 0,2 | 78 |
| 3 | 110 | 3 | " | 0,25 | 82 |
| 4 | 110 | 3 | " | 0,25 | 91 |
| 5 | 110 | 3 | " | 0,5 | 87 |
| 6 | 110 | 3 | " | 0,75 | 84 |
| 7 | 110 | 3 | " | 0,5 | 90 |
| 8 | 110 | 3 | " | 1,0 | 86 |
| 9 | 110 | 3 | " | 1,25 | 84 |
| 10 | 115 | 1,5 | " | 0,03 | 72 |
| 11 | 115 | 1,5 | " | 0,25 | 82 |
| 12 | 115 | 1,5 | " | 0,5 | 83 |
| 13 | 115 | 1,5 | " | 0,75 | 75 |
| 14 | 65 | 3 | " | 1,0 | 63 |
| 15 | 95 | 2 | " | 0,05 | 74 |
| 16 | 95 | 2 | " | 0,3 | 71 |
| 17 | 110 | 1,5 | " | 0,8 | 86 |
| 18 | 110 | 1,5 | " | 0,8 | 87 |
| 19 | 80 | 2 | Bortrifluoridetherat | 0,1 | 81 |
| 20 | 80 | 2 | " | 0,1 | 9 |

**0092728**

Patentansprüche

1. Verfahren zur Herstellung von Blockcopolymeren auf der Basis von Ethylencopolymerisaten, die mindestens eine funktionelle Gruppe aus der Reihe der Epoxide einpolymerisiert enthalten und anderen Polymeren, dadurch gekennzeichnet, daß die Ethylencopolymerisate mit Polymeren umgesetzt werden, die mindestens eine funktionelle Gruppe aus der Reihe der Alkohole, Phenole, Amine, Säuren und/oder Thiole aufweisen.

2. Verfahren nach Anspruch 1, dadurch gekennzeichnet, daß das Ethylencopolymerisat ein Glycidylmethacrylat enthaltendes Copolymerisat des Ethylens ist.

3. Verfahren nach Anspruch 1, dadurch gekennzeichnet, daß die Polymeren nur eine funktionelle Gruppe aus der Reihe der Alkohole, Phenole, Amine, Säuren und/ oder Thiole aufweisen.

4. Verfahren nach Ansprüchen 1 und 3, dadurch gekennzeichnet, daß die Polymeren je eine funktionelle Endgruppe aus der Reihe der Alkohole und Phenole aufweisen und ein Poly(carbonat), Poly(phenylenoxid), Poly(ester), Poly(amid), Poly(ethylenglykolmonoether), Poly(ethylenglykolmonoester), Poly(propylenglykolmonoether), ein Poly(propylenglykolmonoester) oder Poly(oximethylen) sind.

5. Verfahren nach Ansprüchen 1 und 4, dadurch gekennzeichnet, daß das Polymere Poly(2,6-dimethylphenylenoxid) ist.

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | PATENTS ABSTRACTS OF JAPAN, Band 1, Nr. 91, 24. August 1977, Seite 1994 C 77 & JP - A - 52 52991 (HITACHI KASEI KOGYO K.K.) 28.04.1977 * Insgesamt * | 1-5 | C 08 G 81/02 |
| X | CHEMICAL ABSTRACTS, Band 87, Nr. 2, 11. Juli 1977, Seite 45, Nr. 6967p, Columbus, Ohio, USA & JP - A - 77 32045 (TORAY INDUS-TRIES, INC.) 10.03.1977 * Insgesamt * | 1-4 | |
| X | US-A-3 880 947 (S.S. LABANA) * Anspruch 1 * | 1,3-4 | |
| X | US-A-3 639 365 (R.L. ADELMAN) * Anspruch 1; Spalte 6, Zeilen 60-69 * | 1 | RECHERCHIERTE SACHGEBIETE (Int. Cl. 3) C 08 G |

Der vorliegende Recherchenbericht wurde für alle Patentansprüche erstellt.

| Recherchenort DEN HAAG | Abschlußdatum der Recherche 01-08-1983 | Prüfer VAN HUMBEECK F.W.C. |
|---|---|---|